# EUROPÄISCHE PATENTSCHRIFT

(11) **EP 0 758 157 B1**
(45) Veröffentlichungstag und Bekanntmachung des Hinweises auf die Patenterteilung: **24.01.2001**
(21) Anmeldenummer: 96111339.6
(22) Anmeldetag: 13.07.1996
(51) Int. Cl.: H02K 7/09, F16C 39/06

(54) **Magnetlager für einen Rotor**
Magnetic bearing for a rotor
Palier magnétique d'un rotor

(30) Priorität: 08.08.1995 DE 19529038
(43) Veröffentlichungstag der Anmeldung: 12.02.1997
(73) Patentinhaber: Pfeiffer Vacuum GmbH, 35614 Asslar (DE)
(72) Erfinder: Conrad, Armin, 35745 Herborn-Hörbach (DE)

(56) Entgegenhaltungen:
- SU-A- 1 025 997
- US-A- 4 180 946
- US-A- 4 841 204
- US-A- 4 924 180
- US-A- 5 248 940

## Beschreibung

Die Erfindung betrifft ein berührungsloses und aktives Magnetlager für einen Rotor, welcher mit einem Elektromotor angetrieben wird nach dem Oberbegriff des ersten Patentanspruches.

Aufgrund der bekannten Vorteile von Magnetlagerungen gegenüber konventionellen Lagerungen, insbesondere bei Rotationskörpern für hohe Drehzahlen, weist der Stand der Technik eine große Anzahl von Lösungsmöglichkeiten zur magnetischen Lagerung auf. Wenn man auf mechanische Unterstützung wie bei sogenannten Hybridlagerungen verzichten und einen Rotor vollkommen berührungsfrei stabil in Magnetfeldern schweben lassen will, ist man auf elektromagnetische Felder angewiesen. Die Ansteuerung der Spulen zur Erzeugung dieser Felder erfolgt über Regelanordnungen in Abhängigkeit von Sensorsignalen, welche die jeweilige Position oder Positionsänderung des Rotors bezüglich des Stators erfassen. Bekannte Sensoren arbeiten nach optischen, induktiven oder kapazitiven Methoden. Diese Sensoren und Regelanordnungen machen einen beträchtlichen Teil der Kosten für die gesamte Magnetlagerung aus und bedeuten oft aufwendige Konstruktionsmaßnahmen.

Um diesen Aufwand zu reduzieren oder gar ganz zu vermeiden, wurden verschiedene Entwicklungen getätigt, welche jedoch mit so gravierenden Nachteilen behaftet sind, daß sie für den Einsatz in der Praxis nur bedingt tauglich sind.

In der EP 05 94 033 wird ein wirbelstrominduziertes Magnetlager beschrieben. Hierbei kommt durch die Ausnutzung von Induktionsströmen eine Selbstregelung zustande. Dabei dreht sich eine Scheibe aus elektrischleitendem Material zwischen zwei Systemen von auf dem Stator paarweise angeordneten Magneten. Durch die relative Bewegung von elektrischen Leitern und Magneten werden Wirbelströme in den elektrischen Leitern induziert. Diese wiederum erzeugen ein Magnetfeld, dessen Kräfte abstossend zwischen der rotierenden Scheibe aus elektrischleitendem Material und den Magneten, welche auf dem Stator angebracht sind, wirken. Nähert sich die Scheibe den Magneten, werden diese Kräfte größer und bei grösserer Entfernung nehmen sie ab. Dadurch kommt es zu einer Selbstregelung dieses Magnetlagersystems.

Diese Magnetlagerung kann von ihrem Prinzip her nur ab einer bestimmten Drehzahl funktionieren, da sie auf der relativen Bewegung zwischen Leitern und Magneten beruht. Für Stillstand, Anlauf und kleine Drehzahlen müssen zusätzliche Lagervorrichtungen vorhanden sein. Außerdem stellen die Induktionsströme eine Wärmequelle dar, die zu unzulässiger Temperaturerhöhung der Scheibe führt. Trotz erfindungsgemäßer Maßnahmen (die Scheibe so dünn zu machen, daß die von beiden Seiten induzierten Ströme sich teilweise aufheben) ist es nicht gelungen, die Temperaturen auf ein für den ständigen Betrieb zulässiges Maß zu reduzieren.

In der US 53 02 874 wird eine ähnliche Art der magnetischen Lagerung beschrieben. Auf dem Stator befinden sich Permanentmagnete, und der Rotor ist mit geschlossenen Leiterschleifen versehen. Diese Lagerung ist im Grunde mit den gleichen Nachteilen wie die in der EP 05 94 033 beschriebenen behaftet.

Eine Weiterentwicklung wird in der US 53 45 128 vorgestellt. Hier befinden sich auf dem Rotor gegensinnig gepolte Magnetpaare, und der Stator ist mit Spulen versehen. Bei Auslegung des Rotors aus der Mittellage werden in der Spule Ströme induziert, welche ein Magnetfeld erzeugen, dessen Kräfte so gerichtet sind, daß der Rotor wieder zentriert wird. Dadurch, daß die induzierten Ströme auf dem Stator entstehen, hat diese Lösung den Vorteil, daß die entstehende Wärme leichter abgeführt werden kann. Die Statorspulen können auch gleichzeitig als Sensoren dienen und zusätzliche Elektromagnete ansteuern. So wird es möglich, die Magnetlagerung schon bei relativ geringen Drehzahlen zu betreiben. Der Nachteil dieser Konstruktion ist eine aufwendige Magnetstruktur auf dem Rotor und Spulensysteme auf dem Stator.

Der Erfindung liegt die Aufgabe zugrunde, ein Magnetlager mit freischwebendem Rotor vorzustellen, welches selbststabilisierend wirkt und ohne aufwendige Sensoren und Regelanordnungen auskommt. Die Nachteile der im Rahmen des Standes der Technik beschriebenen Anordnungen sollen vermieden werden. Außerdem wird ein Zusammenwirken von Teilen der Antriebsanordnung und Teilen des Magnetlagers angestrebt.

Die Aufgabe wird durch die kennzeichnenden Merkmale des 1. Patentanspruches gelöst. Die Ansprüche 2 - 10 stellen weitere Ausgestaltungsformen der Erfindung dar.

Durch die Erfindung wird es möglich, einen Rotor ohne aufwendige Sensoren und Regelanordnungen selbststabilisierend magnetisch zu lagern. Die Verwendung von Teilen des Antriebes zur Bestimmung der Auslenkung des Rotors aus der Mittellage vereinfacht die Sensoranordnung beträchtlich. Eine oder mehere zusätzliche Spulenanordnungen, deren einzelne Teile in der erfindungsgemäßen Art zusammengeschaltet sind, vermeiden aufwendige Regeleinrichtungen..

An Hand der Abb. 1 - 4 soll die Erfindung näher erläutert werden.
- Abb. 1: zeigt eine schematische Darstellung eines Rotors mit magnetischen Axiallager.
- Abb. 2: zeigt eine schematische Darstellung eines Rotors mit magnetischen Radiallager.
- Abb. 3: zeigt eine detaillierte Darstellung der Spulenanordnungen 4, 4'.
- Abb. 4: zeigt eine detaillierte Darstellung der Spulenanordnungen 5, 5'.

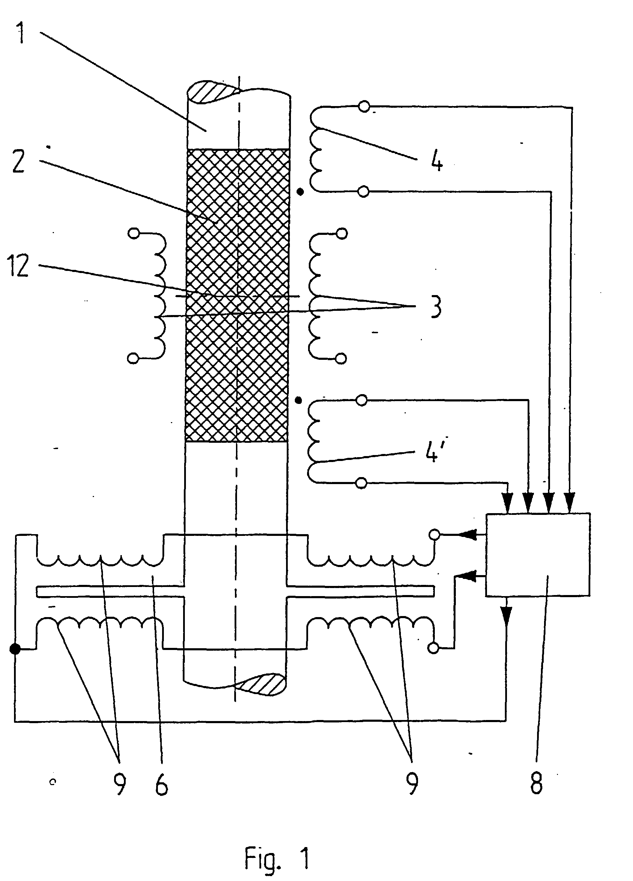

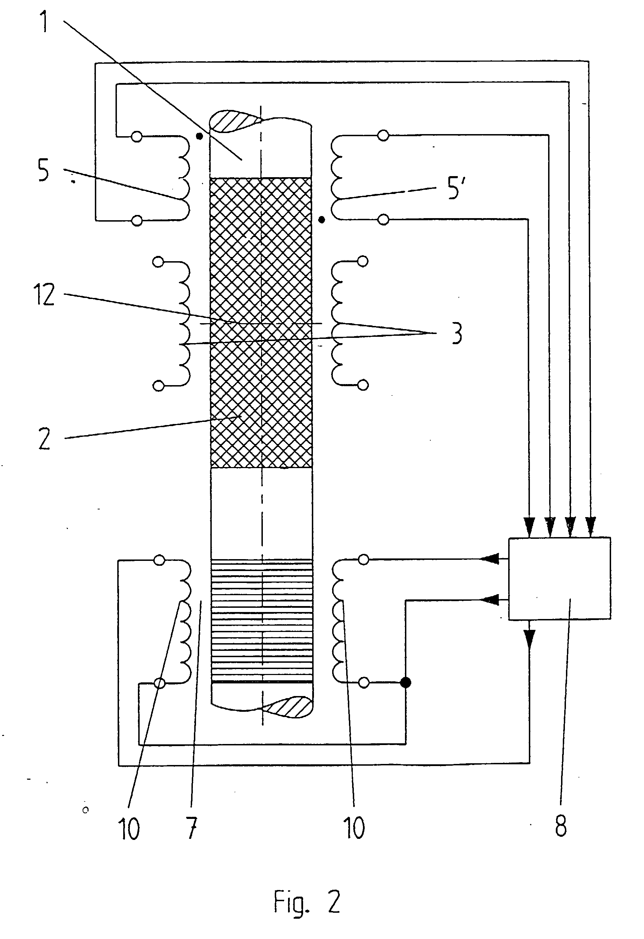

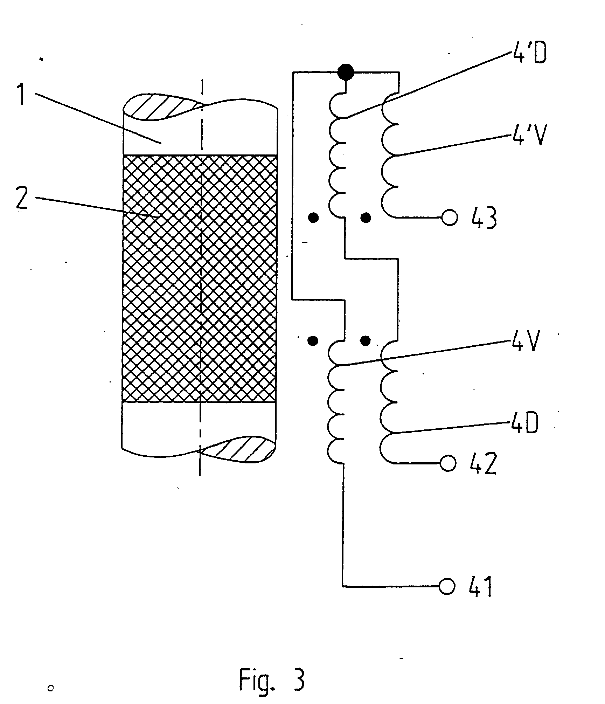

In den Abb. 1 und 2 ist der Rotor mit 1 bezeichnet. Der Antrieb erfolgt durch einen Elektromotor, der durch die auf dem Rotor 1 angebrachten Permanentmagnete 2 und durch die Statorspulen 3 dargestellt ist. Die Abb. 1 zeigt das axiale Magnetlager 6 und zusätzliche Spulenanordnungen 4 und 4', welche auf der Statorseite im axialen Grenzbereich der Permanentmagnete 2 des Rotors angebracht sind. Dabei ist es wichtig, daß sich die Spulenanordnungen 4 und 4' in einem gewissen axialen Abstand voneinander und auch in einem gewissen Abstand von der Mitte 12 der Permanentmagnete 2 befinden. Entsprechend zeigt die Abb. 2 das radiale Magnetlager 7 und zusätzliche Spulenanordnungen 5 und 5', welche auf dem Stator 180 ° versetzt zueinander und mit gleichem radialen Abstand zur Sollage des Permanentmagneten 2 des Rotors angebracht sind. Über eine Anpassungseinheit 8 werden die Sensorsignale der Spulenanordnungen 4, 4' bzw. 5, 5' den Spulen 9 bzw. 10 der Magnetlager 6 bzw. 7 zu deren Stabilisierung zugeführt. Die Anpassungseinheit 8 kann zusätzlich mit aktiven Regelelementen ausgestattet sein. Die Abb. 3 zeigt, wie die Spulenanordnungen 4, 4' für das axiale Magnetlager aufgebaut und verschaltet sind. Dabei bestehen die Spulenanordnungen 4 und 4' aus jeweils zwei Teilen 4D und 4V bzw. 4'D und 4'V mit unterschiedlicher Windungszahl. Dabei weisen die Spulen 4D und 4'D bzw. 4V und 4'V jeweils gleiche Windungszahlen auf.

Befindet sich der Rotor 1 in der axialen Mittellage im Magnetlager 6 und somit in symmetrischer Lage gegenüber den Spulenanordnungen 4 und 4', dann werden jeweils in den Teilen 4D und 4'D bzw. 4V und 4'V gleiche Spannungen induziert. Aufgrund der unterschiedlichen Windungszahlen in den Spulen 4D und 4V bzw. 4'D und 4'V sind die induzierten Spannungen in diesen Spulenteilen unterschiedlich.

Die Spulenteile 4D und 4'D sind derart in Serie geschaltet, daß sich die induzierten Spannungen subtrahieren und somit eine-Differenzspannung entsteht. Für den Fall, daß der Rotor sich in der axialen Mittellage befindet, ist die Differenzspannung null. Bei Auslenkung des Rotors aus der Mittellage wird die Diflerenzspannung verschieden von null. Die Amplitude dieser Differenzspannung ist ein Maß für die absolute Größe der Auslenkung. Die Richtung der Auslenkung ist jedoch allein aus der Amplitude nicht erkennbar. Dies wird erst unter Berücksichtigung der Phasenlage der Differenzspannung relativ zu einer Bezugsgröße möglich. Duch den zusätzlichen Einsatz von phasenempfindlichen Gleichrichtern können so Größe und Richtung der Auslenkung des Rotors aus der Mittellage bestimmt werden.

Der Einsatz von phasenempfindlichen Gleichrichtern bedeutet jedoch einen zusätzlichen Aufwand durch aktive Bauelemente, welcher gerade durch die Aufgabenstellung der Erfindung verhindert werden sollte.

Erfindungsgemäß wird zu den in den Spulen 4V und 4'V induzierten Spannungen, welche in ihrer Phasenlage um 180 ° verschoben sind, die Differenzspannung addiert. Unter Berücksichtigung der Phasenlage wird je nach Richtung der Rotorverschiebung entweder ein positiver oder ein negativer Wert addiert.

Somit kann allein aus den Spannungsamplituden zwischen den Punkten 41 und 42 bzw. zwischen 41 und 43 die Größe und die Richtung der axialen Verschiebung des Rotors festgestellt werden.

Die so erhaltenen Signale werden als Sensorsignale zur Stabilisierung dem Magnetlager 6 zugeführt. Dabei können bei optimaler Anpassung die Elektromagnete des Magnetlagers ohne aktive Verstärkerelemente stabilisiert werden. Die Sensorsignale können aber auch benutzt werden, um aktive Verstärkerelemente anzusteuern.

Durch die Anwendung mehrerer Spulenanordnungen, welche über den Umfang des Rotors verteilt sind, z.B. 3 Spulenanordnungen um je 120 ° versetzt bei einem 3-Phasensystem, kann für den Fall, daß das Sensorsignal gleichgerichtet und als pulsierendes DC-Signal weiterverarbeitet wird, dessen Welligkeit stark vermindert werden. Dies ergibt Vorteile hinsichtlich Verlustleistung, Geräuschdämpfung und Vibrationen.

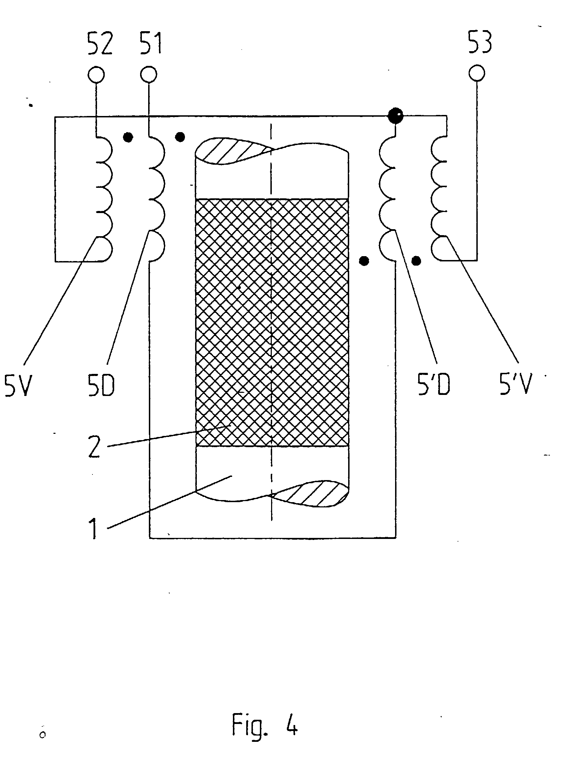

Die Abb. 4 zeigt, wie die Spulenanordnungen 5 und 5' für das radiale Magnetlager aus Abb. 2 aufgebaut und verschaltet sind. Die Spulenanordnungen 5 und 5' bestehen entsprechend aus jeweils zwei Teilen 5D und 5V bzw. 5'D und 5'V mit unterschiedlicher Windungszahl. Dabei weisen die Spulen 5D und 5'D bzw. 5V und 5'V jeweils gleiche Windungszahlen auf.

Die weitere Beschreibung der Anordnung und der Funktionsweise erfolgt im einzelnen wie die Beschreibung für die axiale Anordnung.

## Patentansprüche

1. Magnetlagerung für einen Rotor (1), dessen Antrieb aus einem Gleichstrommotor mit Permanentmagneten (2) auf dem Rotor und mit Statorspulen (3) besteht, dadurch gekennzeichnet, daß im Bereich der Permanentmagnete (2) des Rotors eine oder mehrere zusätzliche Spulenanordnungen (4, 4') bzw. (5, 5') auf der Statorseite vorhanden sind, welche zusammen mit den Permanentmagneten (2) des Antriebs eine Regelanordnung für die Magnetlagerung bilden, so daß in den Spulenanordnungen von den umlaufenden Permanentmagneten (2) Spannungen induziert werden, deren charakteristische Größen, wie Amplituden und Phasen, von der relativen geometrischen Lage von Permanentmagneten (2) und zusätzlichen Spulenanordnungen (4, 4') bzw. (5, 5') zueinander abhängen und daß diese charakterischtischen Größen als Sensorsignale zur Stabilisierung der Magnetlagerung (6) bzw. (7) benutzt werden.

2. Magnetlagerung nach Anspruch 1, dadurch gekennzeichnet, daß das Magnetlager (6) als Axiallager ausgebildet ist und in den zusätzlichen Spulenanordnungen (4, 4') Spannungen induziert werden,-welche bei einer Änderung der axialen Lage des Rotors (1) zur Stabilisierung des magnetischen Axiallagers (6) dienen.

3. Magnetlagerung nach Anspruch 2, dadurch gekennzeichnet, daß die Spulenanordnungen (4) und (4') in axialer Richtung in einem Abstand voneinander und in Abständen von der Mitte (12) der Permanentmagnete (2) sich befinden.

4. Magnetlagerung nach einem der Ansprüche 1, 2 oder 3, dadurch gekennzeichnet, daß die Spulenanordnungen (4, 4') aus jeweils 2 Teilen (4D, 4V) bzw. (4'D, 4'V) mit unterschiedlicher Windungszahl bestehen und daß die Spulen (4D) und (4'D) bzw. (4V) und (4'V) jeweils gleiche Windungszahlen aufweisen.

5. Magnetlagerung nach Anspruch 4, dadurch gekennzeichnet, daß die Spulenteile (4D) und (4'D) so in Serie geschaltet sind, daß sich die induzierten Spannungen subtrahieren und somit eine Differenzspannung entsteht.

6. Magnetlagerung nach Anspruch 5, dadurch gekennzeichnet, daß die Spülenteile (4V) und (4'V) nach Abb. 3 so mit den Spulenteilen (4D) und (4'D) verbunden sind, daß zu den in den Spulenteilen (4V) und (4'V) induzierten Spannungen, welche in ihrer Phasenlage um 180 ° gegeneinander verschoben sind, die Differenzspannung addiert wird und zwar in einer solchen Weise, daß in Abhängigkeit von der Richtung der Rotorverschiebung die Phasenlage der Differenzspannung so ist, daß einmal ein positiver und einmal ein negativer Wert addiert wird.

7. Magnetlagerung nach Anspruch 1, dadurch gekennzeichnet, daß das Magnetlager (7) als Radiallager ausgebildet ist, und in den zusätzlichen Spulenanordnungen (5, 5') Spannungen induziert werden, welche bei einer Änderung der radialen Lage des Rotors (1) zur Stabilisierung des magnetischen Radiallagers (7) dienen.

8. Magnetlagerung nach Anspruch 1 oder 7, dadurch gekennzeichnet, daß die Spulenanordnungen (5, 5') aus jeweils 2 Teilen (5D, 5V) bzw. (5'D, 5'V) mit unterschiedlicher Windungszahl bestehen und daß die Spulen (5D) und (5'D) bzw. (5V) und (5'V) jeweils gleiche Windungszahlen aufweisen.

9. Magnetlagerung nach Anspruch 8, dadurch gekennzeichnet, daß die Spulenteile (5D) und (5'D) so in Serie geschaltet sind, daß sich die induzierten Spannungen subtrahieren und somit eine Differenzspannung entsteht.

10. Magnetlagerung nach Anspruch 9, dadurch gekennzeichnet, daß die Spulenteile (5V) und (5'V) nach Abb. 4 so mit den Spulenteilen (4D) und (4'D) verbunden sind, daß zu den in den Spulenteilen (4V) und (4'V) induzierten Spannungen, welche in ihrer Phasenlage um 180 ° gegeneinander verschoben sind, die Differenzspannung addiert wird und zwar in einer solchen Weise, daß in Abhängigkeit von der Richtung der Rotorverschiebung die Phasenlage der Differenzspannung so ist, daß einmal ein positiver und einmal ein negativer Wert addiert wird.

## Claims

1. A magnetic bearing for a rotor (1) whose drive means comprises a dc motor incorporating permanents magnets (2) on the rotor and stator coils (3), characterised in that one or more additional coil assemblies (4, 4') or (5, 5') are provided to the side of the stator in the vicinity of the permanents magnets (2) of the rotor, said additional coil assemblies, in conjunction with the permanents magnets (2) of the drive means, forming a control arrangement for the magnetic bearing so that voltages are induced in the coil assemblies by the rotating permanent magnets (2), whereby the characteristic values of the voltages, such as the amplitudes and the phases thereof, are dependent on the mutual geometric positions of the permanent magnets (2) relative to the additional coil assemblies (4, 4') or (5, 5'), and in that these characteristic values are used as sensor signals for stabilising the magnetic bearing (6) or (7).

2. A magnetic bearing in accordance with Claim 1, characterised in that the magnetic bearing (6) is in the form of a thrust bearing and there are induced in the additional coil assemblies (4, 4') voltages which serve to stabilise the magnetic thrust bearing (6) in the event of a change in the axial position of the rotor (1).

3. A magnetic bearing in accordance with Claim 2, characterised in that the coil assemblies (4) and (4') are mutually spaced in the axial direction and are each spaced from the centre (12) of the permanents magnets (2).

4. A magnetic bearing in accordance with any of the Claims 1, 2, or 3, characterised in that the respective coil assemblies (4, 4') each consist of 2 sections (4D, 4V) and (4'D, 4'V) having different numbers of turns, and in that respective coils (4D) and (4'D) or (4V) and (4'V) each have the same number of turns.

5. A magnetic bearing in accordance with Claim 4, characterised in that the coil sections (4D) and (4'D) are connected in series in such a manner that the induced voltages are subtracted from one another thereby resulting in a difference voltage.

6. A magnetic bearing in accordance with Claim 5, characterised in that the coil sections (4V) and (4'V) are connected, as in Fig. 3, to the coil sections (4D) and (4'D) such that the difference voltage is added to the mutually 180° phase-displaced voltages induced in the coil sections (4V) and (4'V), i.e. this is effected in such that a way that, in dependence on the direction of displacement of the rotor, the phase angle of the difference voltage is such that firstly a positive value, and then a negative value is added.

7. A magnetic bearing in accordance with Claim 1, characterised in that the magnetic bearing (7) is in the form of a radial bearing and there are induced in the additional coil assemblies (5, 5') voltages which serve to stabilise the magnetic radial bearing (7) in the event of a change in the radial position of the rotor (1).

8. A magnetic bearing in accordance with Claim 1 or 7, characterised in that the respective coil assemblies (5, 5') each consist of 2 sections (5D, 5V) and (5'D, 5'V) having different numbers of turns, and in that respective coils (5D) and (5'D) or (5V) and (5'V) each have the same number of turns.

9. A magnetic bearing in accordance with Claim 8, characterised in that the coil sections (5D) and (5'D) are connected in series in such a manner that the induced voltages are subtracted from one another thereby resulting in a difference voltage.

10. A magnetic bearing in accordance with Claim 9, characterised in that the coil sections (5V) and (5'V) are connected, as in Fig. 4, to the coil sections (4D) [sic] and (4'D) [sic] such that the difference voltage is added to the mutually 180° phase -displaced voltages induced in the coil sections (4V) [sic] and (4'V) [sic], i.e. this is effected in such a way that, in dependence on the direction of displacement of the rotor, the phase angle of the difference voltage is such that firstly a positive value, and then a negative value is added.

## Revendications

1. Logement magnétique pour un rotor (1) dont l'entraînement se compose d'un moteur à courant continu à aimants permanents (2) sur le rotor et à bobines (3) de stator, caractérisé en ce qu'un ou plusieurs agencements additionnels (4, 4') ou (5, 5') de bobines qui forment avec les aimants permanents (2) de l'entraînement un agencement de régulation du logement magnétique sont disposés sur le côté du stator dans la zone des aimants permanents (2) du rotor d'une manière telle que les aimants permanents rotatifs (2) induisent, dans les agencements de bobines, des tensions dont les grandeurs caractéristiques, par exemple les amplitudes et les phases dépendent de la position géométrique relative des aimants permanents (2) et des agencements additionnels (4, 4') ou (5, 5') de bobines et que ces grandeurs caractéristiques sont utilisées comme signaux de capteurs pour stabiliser le logement magnétique (6) ou (7).

2. Logement magnétique selon la revendication 1, caractérisé en ce que le logement magnétique (6) est réalisé sous forme de palier axial et que des tensions qui servent à stabiliser le logement magnétique axial (6) lors d'une modification de la position axiale du rotor (1) sont induites dans les agencements additionnels (4, 4') de bobines.

3. Logement magnétique selon la revendication 2, caractérisé en ce que les agencements de bobines (4) et (4') se trouvent en direction axiale à distance l'un de l'autre et à distances du milieu (12) des aimants permanents (2).

4. Logement magnétique selon l'une quelconque des revendications 1 à 3, caractérisé en ce que les agencements (4, 4') de bobines se composent respectivement de deux éléments (4D, 4V) ou (4'D, 4'V) à nombres différents d'enroulements et en ce que les bobines (4D) et (4'D) ou (4V) et (4'V) présentent respectivement des nombres égaux d'enroulements.

5. Logement magnétique selon la revendication 4, caractérisé en ce que les éléments (4D) et (4'D) de bobines sont montés en série d'une manière telle que les tensions induites se soustraient et qu'il en résulte une tension différentielle.

6. Logement magnétique selon la revendication 5, caractérisé en ce que les éléments (4V) et (4'V) de bobine de la Fig. 3 sont reliés aux éléments (4D) et (4'D) de bobines d'une manière telle que la tension différentielle est additionnée aux tensions induites dans les éléments (4V) et (4'V) de bobines qui sont déphasées de 180° l'une par rapport à l'autre, et ceci d'une manière telle que la position de phase de la tension différentielle en fonction du sens de mouvement du rotor est telle que c'est une fois une valeur positive et une fois une valeur négative qui est additionnée.

7. Logement magnétique selon la revendication 1, caractérisé en ce que le logement magnétique (7) est réalisé sous forme de palier radial et que des tensions qui servent à stabiliser le logement magnétique radial (7) lors d'une modification de la position radiale du rotor (1) sont induites dans les agencements additionnels (5, 5') de bobines.

8. Logement magnétique selon la revendication 1 ou 7, caractérisé en ce que les agencements (5, 5') de bobines se composent respectivement de 2 éléments (5D, 5V) ou (5'D, 5'V) à nombres différents d'enroulements et en ce que les bobines (5D) et (5'D) ou (5V) et (5'V) présentent respectivement des nombres égaux d'enroulements.

9. Logement magnétique selon la revendication 8, caractérisé en ce que les éléments (5D) et (5'D) de bobines sont montés en série d'une manière telle que les tensions induites se soustraient et qu'il en résulte une tension différentielle.

10. Logement magnétique selon la revendication 9, caractérisé en ce que les éléments (5V) et (5'V) de bobine de la Fig. 4 sont reliés aux éléments (5D) et (5'D) de bobines d'une manière telle que la tension différentielle est additionnée aux tensions induites dans les éléments (5V) et (5'V) de bobines qui sont déphasées de 180° l'une par rapport à l'autre, et ceci d'une manière telle que la position de phase de la tension différentielle en fonction du sens de mouvement du rotor est telle que c'est une fois une valeur positive et une fois une valeur négative qui est additionnée.
